(19) Europäisches Patentamt
European Patent Office
Office européen des brevets

(11) Veröffentlichungsnummer: **0 222 983**
**B1**

(12) **EUROPÄISCHE PATENTSCHRIFT**

(45) Veröffentlichungstag der Patentschrift: **19.07.89**

(51) Int. Cl.⁴: **C08F 14/06**, C08F 2/20

(21) Anmeldenummer: **86111312.4**

(22) Anmeldetag: **16.08.86**

(54) **Verfahren zur Herstellung von Vinylchlorid-Polymeren.**

(30) Priorität: **17.10.85 DE 3536936**

(43) Veröffentlichungstag der Anmeldung:
**27.05.87 Patentblatt 87/22**

(45) Bekanntmachung des Hinweises auf die Patenterteilung:
**19.07.89 Patentblatt 89/29**

(84) Benannte Vertragsstaaten:
**BE CH DE FR GB IT LI NL SE**

(56) Entgegenhaltungen:
**US-A- 4 000 355**

(73) Patentinhaber: **HÜLS AKTIENGESELLSCHAFT,**
**Patentabteilung / PB 15 - Postfach 13 20,**
**D-4370 Marl 1(DE)**

(72) Erfinder: **Bieringer, Helmo, Dr., Buttstegge 40,**
**D-4421 Reken 4(DE)**
Erfinder: **Hofmann, Peter, Dr., Dormagenerstrasse 42,**
**D-4370 Marl(DE)**

EP 0 222 983 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Zur Herstellung von Polyvinylchlorid nach dem Suspensionspolymerisationsverfahren wird das Monomere oder das Monomergemisch durch mechanisches Rühren in der wäßrigen Phase fein verteilt, mit Hilfe von Schutzkolloiden stabilisiert und in Anwesenheit von Radikalinitiatoren polymerisiert.

Als Schutzkolloide oder Suspensionsstabilisatoren können wasserlösliche, natürliche, polymere Stoffe wie Gelatine, wasserlösliche Cellulosederivate wie Alkylcellulosen, Hydroxyalkylcellulosen und dgl., wasserlösliche synthetische Produkte wie teilverseifte Polyvinylacetate, Copolymere aus Maleinsäureanhydrid oder Vinylpyrrolidon mit Vinylacetat und auch verschiedene Kombinationen der genannten Stoffe eingesetzt werden.

Bei nach bekannten Verfahren hergestellten Suspensions-Polyvinylchloridharzen besteht eine Wechselwirkung zwischen der Porosität und dem Schüttgewicht, und zwar verursacht eine Erhöhung der Porosität zwecks guter Entmonomerisierung eine Herabsetzung des Schüttgewichts. Eine Herabsetzung des Schüttgewichts bedeutet jedoch eine Abnahme des Ausstoßes an extrudiertem Polyvinylchloridharz. Insbesondere bei der Hartverarbeitung des PVC ohne Weichmacher wird neben einer hohen Schüttdichte auch eine möglichst hohe Porosität angestrebt, weil dadurch die Entgasbarkeit des Polyvinylchloridharzes erleichtert, die Mischzeit zur Einbringung der Verarbeitungshilfsstoffe und Thermostabilisatoren vor der Extrusion verkürzt und die Anzahl von Stippen oder Fischaugen im Extrudat verringert wird.

Um diesen Nachteilen zu begegnen, wurden bereits grenzflächenaktive Stoffe als porositätsverbessernde Mittel, wie zum Beispiel Sorbitanmonolaurat, zugesetzt (DE-OS 22 08 796). Nach diesem Verfahren hergestellte Polyvinylchloridharze besitzen jedoch eine ungenügend hohe Schüttdichte, verminderten Extruderausstoß bei der Hartverarbeitung und hohen Stippenpegel im Extrudat.

Es war auch bereits bekannt, bei der Suspensionspolymerisation von Vinylchlorid Polyvinylalkohole bzw. Celluloseether als primäre Suspensionsmittel und hochmolekulare Verbindungen, die Stickstoff und Sauerstoffatome enthalten, als Co-Suspensionsstabilisatoren einzusetzen, vgl. DE-OS 22 34 038, GB-PS 991 134, DE-OS 26 53 087. Wie aus den Vergleichsversuchen in der Tabelle zu entnehmen ist, zeigen diese Polyvinylchloridharze jedoch einen vergleichsweise geringen Ausstoß bei der Hartextrusion oder einen sehr hohen Stippenpegel im Extrudat.

Diese Nachteile werden überwunden durch ein Verfahren zur Herstellung von Polyvinylchlorid durch Polymerisation von Vinylchlorid in wäßriger Suspension in Gegenwart von bis zu 20 Gew.-%, bezogen auf eingesetzte Monomere, copolymerisierbarer Monomerer und/oder bis zu 20 Gew.-%, bezogen auf eingesetzte Monomere, mit Vinylchlorid pfropfcopolymerisierbarer Polymerer in Gegenwart von öllöslichen radikalisch zerfallenden Aktivatoren, einem Gemisch aus 2 oder mehr hochmolekularen, oberflächenaktiven Suspendiermitteln sowie gegebenenfalls in Gegenwart von Emulgatoren, Puffersubstanzen und Molekülgrößenreglern bei 30 bis 80 °C, das dadurch gekennzeichnet ist, daß 0.04 bis 1 Gew.-%, bezogen auf eingesetzte Monomere, eines Suspendiermittelgemisches verwendet werden, welches besteht aus

a) 10 - 90 Gew.-%, bezogen auf das Suspendiermittelgemisch, eines Kohlenhydratesters aus einem Kohlenhydrat folgender Formel:

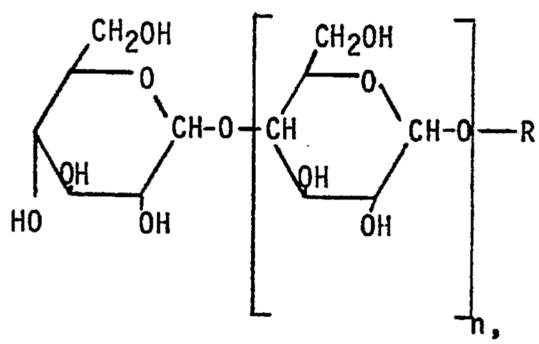

in der n eine Zahl von 0 bis 99 und R den Rest eines 2- bis 6-wertigen aliphatischen linearen oder verzweigten Alkohols mit 2 bis 12 Kohlenstoffatomen bedeutet,

und einer gesättigten oder ungesätigten, linearen oder verzweigten Carbonsäure mit 6 bis 24 Kohlenstoffatomen,

sowie aus

b) 90 bis 10 Gew.-%, Methylcellulose, bezogen auf das Suspendiermittelgemisch, Methylhydroxyethylcellulose, oder Methylhydroxypropylcellulose mit einem molekularen Substitutionsgrad der Methoxygruppe von 1.4 bis 2.4 und einem molaren Substitutionsgrad der ggf. vorhandenen Hydroxyalkoxygruppe von 0.08 bis 0.28; oder Hydroxyethylcellulose oder Hydroxypropylcellulose mit einem molaren Substitutionsgrad von 1 bis 3.5; oder Aminoethyl-hydroxypropyl-cellulose mit einem molaren Substitutionsgrad der Aminoethylgruppe von 0.05 bis 1 und der Hydroxypropylgruppe von 3 bis 5, wobei die 2 Gew.-%ige wäßrige Lösung der genannten Cellulose-ether bei 20 °C eine Viskosität von 15 bis 500 • $10^{-3}$ Pa•s ausweist oder eines teilverseiften Polyvinylacetats mit einem Hydrolysegrad von 69-90 mol-% und einer Viskosität von 2 bis 100 mPa•s, gemessen in 4 Gew.-%iger wäßriger Lösung, bei 20 °C. Vorzugsweise wird Komponente a) in Mengen von 20 - 80 Gew.-% bezogen auf das Suspendiermittelgemisch, eingesetzt.

Eine besonders günstige Eigenschaftskombination des Polyvinylchloridharzes wird mit Suspensionsmittelgemischen erhalten, die als Komponente b) ein teilverseiftes Polyvinylacetat mit 69 bis 75 mol-% Hydrolysegrad enthalten, und die 20 bis 80, und insbesondere 70 bis 30 Gew.-%, der Komponente b) enthalten.

Der als Komponente a) einzusetzende Kohlenhydratester kann z. B. nach DE-OS 24 23 278 hergestellt werden.

Das zugrundeliegende Kohlenhydrat ist aus Aglykon und Kohlenhydrat-Rest aufgebaut. Der Kohlenhydrat-Rest enthält 1 bis 100, vorzugsweise 1 bis 50, insbesondere 1 bis 15 Anhydroglycoseeinheiten, die Alpha- und/oder Beta-glykosidisch miteinander verknüpft sein können. Der Kohlenhydratrest kann eine einheitliche molekulare Struktur haben, vorzugsweise ist er jedoch ein Gemisch von Kohlenhydrat und unterschiedlicher Zahl von Anhydratglycoseeinheiten.

Das Aglykon R-OH kann ein 2- bis -6-wertiger aliphatischer linearer oder verzweigter Alkohol mit 2 bis 12 Kohlenstoffatomen sein. Es kommen beispielsweise infrage:

Ethylenglykol, 1,2-Propylenglykol, 1,3-Propylenglykol, 1,2-Butylenglykol, 1,4-Butandiol, 1,6-Hexandiol, Glycerin, Trimethylolpropan, Erythrit, Pentaerythrit, Pentite wie z. B. Arabit, Xylit, Hexite, wie z. B. Sorbit, Mannit, Dulcit.

Das aus Aglykon und Anhydroglycoseeinheiten zusammengesetzte Kohlehydrat kann mit gesättigten oder ungesättigten, linearen oder verzweigten aliphatischen Carbonsäuren bzw. Carbonsäuregemischen, welche 6 bis 24 Kohlenstoffatomen enthalten, verestert werden.

Als solche Carbonsäuren lassen sich beispielsweise einsetzen:

Capronsäure, Caprylsäure, Caprinsäure, Laurinsäure, Myristinsäure, Palmitinsäure, Stearinsäure, Arachinsäure, Behensäure, Lignocerinsäure, Palmitoleinsäure, Ölsäure, Elaidinsäure, Linolsäure, Linolensäure, Rizinolsäure, oder deren natürlichen Triglyceriden entsprechende Mischungen wie z. B. Rübölfettsäure, Tallölfettsäure, Kokosfettsäure, Sojaölfettsäure, Rizinusölfettsäure, Palmkernölfettsäure, Palmölfettsäure, Erdnußölfettsäure, Baumwollsaadölfettsäure, Sonnenblumenölfettsäure, Leinölfettsäure, Talgfettsäure, Fischölfettsäure.

Die molare Menge der im Kohlenhydratester vorliegenden Fettsäuren beträgt mindestens 1 Mol, bezogen auf das Kohlenhydrat, vorzugsweise 0,5 bis 2 Mol pro Anhydroglycoseeinheit, und wird nach oben begrenzt durch die Gesamtzahl der in Aglykon und Anhydroglucoseeinheiten, d. h. im gesamten Kohlenhydrat zur Verfügung stehenden OH-Gruppen.

Die Herstellung der als Komponente a) des Suspendiermittelgemisches beschriebenen Kohlenhydratester erfolgt z.B. nach DE-OS 24 23 278.

Die Komponenten a) und b) des Suspendiermittelgemisches werden der Polymerisationsflotte im allgemeinen als wäßrige Lösungen zugesetzt. Diese können zur Verbesserung der Löslichkeit des entsprechenden Suspensionsmittels mit Wasser mischbare aliphatische Alkohole, aliphatische Ketone oder aliphatische Carbonsäureester enthalten.

Die in den Ansprüchen angegeben Gewichtsprozente der Suspendiermittelkomponenten a) und b) addieren sich jeweils auf 100 Gew.%.

Das gesamte Suspendiermittelgemisch wird in einer Menge von 0.04 bis 1 Gew.-%, bezogen auf eingesetzte Monomere, verwendet. Oberhalb 1 Gew.-% Zusatzmenge wird das erzeugte Polymere zunehmend feinkörnig, es treten Schwierigkeiten durch Stauben beim Verarbeiten des trockenen Polymerpulvers ein, Rieselfähigkeit und Schüttgewicht nehmen ab. Werden weniger als 0.04 Gew.-% der Suspendiermittelmischung verwendet, treten in zunehmendem Maße Grobanteile und Agglomerate von Polymerkörnern auf, die erzeugten Polymersuspensionen werden instabil, was bis zur Blockbildung im Polymerisationskessel führen kann. Vorzugsweise wird das Suspendiermittelgemisch in Mengen von 0.06 bis 0.3 Gew.-%, insbesondere 0,07 bis 0,2 Gew.% bezogen auf eingesetzte Monomere, verwendet.

Das erfindungsgemäße Verfahren eignet sich zur Polymerisation von Vinylchlorid in wäßriger Phase in Gegenwart von 0 bis 20 Gew.-%, bezogen auf eingesetzte Monomere, mit Vinylchlorid copolymerisierbarer Monomerer, wobei gute Ergebnisse in Gegenwart von 0,1 bis 10 Gew.-% vorzugsweise 1 bis 9 Gew.%, copolymerisierbarer Monomerer erzielt werden. Insbesondere gute Ergebnisse liefert auch die Homopolymerisation von Vinylchlorid. Das Verfahren kann auch zur Pfropfcopolymerisation von Vinylchlorid verwendet werden, wobei neben Vinylchlorid noch andere copolymerisierbare Monomere zugegen sein können. Es werden hierbei 0.1 bis 20 Gew.-%, vorzugsweise 1 bis 15 Gew.-%, von Polymeren, die mit Vinylchlorid pfropfcopolymerisierbar sind, eingesetzt.

Die erfindungsgemäße Herstellung der Vinylchlorid-, Homo-, -Co- oder -Pfropfcopolymerisate kann nach kontinuierlichem oder Chargen-Polymerisationsverfahren, mit oder ohne Verwendung eines Saat-Vorpolymerisats, erfolgen. Es wird dabei in wäßriger Suspension in Gegenwart von 0.001 bis 3 Gew.-%,

vorzugsweise 0.01 bis 0.3 Gew.-%, bezogen auf Monomere, radikal-bildender Katalysatoren, wie zum Beispiel Diaryl-, Diacylperoxide, wie Diacetyl-, Acetylbenzoyl-, Di-lauroyl-, Dibenzoyl-, Bis-2.4-dichlorbenzoyl-,Bis-2-methylbenzoyl-peroxid; Dialkylperoxide wie Di-tert.-butylperoxid, Perester, wie tert.-Butylpercarbonat; tert.-Butylperacetat, tert.-Butylperoctoat, tert.-Butylperpivalat;Dialkylperoxydicarbonate, wie Diisopropyl-, Diethylhexyl-, Dicyclohexyl-, Diethylcyclohexylperoxydicarbonate; gemischte Anhydride von organischen Sulfopersäuren und organischen Säuren, wie Acetylcyclohexylsulfonylperoxid; als Polymerisationskatalysatoren bekannte Azoverbindungen, wie Azoisobuttersäurenitril, außerdem gegebenenfalls Zusätzen von Persulfaten, wie Kalium-, Natrium- oder Ammonium-persulfat, Wasserstoffperoxid, tert.-Butylhydroperoxid oder anderen wasserlöslichen Peroxiden sowie Mischungen verschiedener Katalysatoren polymerisiert, wobei peroxidische Katalysatoren auch in Gegenwart von 0.01 bis 1 Gew.-%, bezogen auf Monomere, einer oder mehrerer reduzierender Substanzen, die zum Aufbau eines Redox-Katalysatorsystems geeignet sind, wie zum Beispiel Sulfite, Bisulfite, Dithionite, Thiosulfate, Aldehydsulfoxylate, zum Beispiel Na-Formaldehydsulfoxylat, eingesetzt werden können.

Außerdem kann die Polymerisation in Gegenwart von 0.01 bis 1 Gew.-%, bezogen auf Monomere, von einem oder mehreren nichtionogenen Emulgatoren durchgeführt werden, wobei die Emulgatoren sowohl zur Voremulgierung der Monomeren allein, wie auch bei der eigentlichen Polymerisation in Mischung mit den obengenannten Suspendiermitteln, eingesetzt werden können.

Als nichtionogene Emulgatoren sind beispielsweise geeignet: Polyoxyethylenester von Fettsäuren sowie Polypropylenoxid-Polyethylenoxid-Kondensationsprodukte.

Außer in Gegenwart von Katalysatoren, dem erfindungsgemäßen Suspendiermittelgemisch und gegebenenfalls Emulgatoren kann die Polymerisation in Gegenwart von Puffersubstanzen, beispielsweise Alkaliacetate, Borax; Alkalicarbonate, Alkaliphosphate, Ammoniak oder Ammo niumsalzen von Carbonsäuren sowie von Molekülgrößenreglern, wie beispielsweise aliphatische Aldehyde mit 2 bis 4 Kohlenstoffatomen, Chlor- oder Bromkohlenwasserstoffe, wie zum Beispiel Di- und Trichlorethylen, Chloroform, Bromoform, Methylenchlorid sowie Mercaptanen, durchgeführt werden. Beispiele weiterer geeigneter Polymerisationshilfsstoffe finden sich in H. Kainer "Polyvinylchlorid und Vinylchlorid-Mischpolymerisate", Auflage 1965, Seiten 13 bis 34.

Zur Copolymerisation mit Vinylchlorid sind beispielsweise eines oder mehrere folgender Monomerer geeignet: Olefine, wie Ethylen oder Propylen, Vinylester von geradkettigen oder verzweigten Carbonsäuren mit 2 bis 20, vorzugsweise 2 bis 4 Kohlenstoffatomen, wie Vinylacetat, -propionat, -butyrat, -2-ethylhexoat, Vinylisotridecansäureester; Vinylhalogenide, wie Vinylfluorid, Vinylidenfluorid, Vinylidenchlorid, Vinylether, Vinylpyridin, ungesättigte Säuren, wie Malein-, Fumar-, Acryl-, Methacrylsäure und deren Mono- oder Diester mit Mono- oder Dialkoholen mit 1 bis 10 Kohlenstoffatomen; Maleinsäureanhydrid; Maleinsäureimid sowie dessen N-Substitutionsprodukte mit aromatischen, cycloaliphatischen sowie gegebenenfalls verzweigten, aliphatischen Substitutenten; Acrylnitril, Styrol.

Zur Pfropfcopolymerisation können beispielsweise vernetzte oder unvernetzte elastomere Polymerisate verwendet werden, die durch Polymerisation von einem oder mehreren folgender Monomerer erhalten wurden: Diene wie Butadien, Cyclopentadien; Olefine wie Ethylen, Propylen; Styrol, ungesättigte Säuren, wie Acryl- oder Methacrylsäure sowie deren Ester mit Mono- oder Dialkoholen mit 1 bis 10 Kohlenstoffatomen, Acrylnitril, Vinylverbindungen wie Vinylester von geradkettigen oder verzweigten Carbonsäuren mit 2 bis 20, vorzugsweise 2 bis 4 Kohlenstoffatomen, Vinylhalogenide wie Vinylidenchlorid und Vinylchlorid. Letzteres jedoch nur mit mindestens einem der zuvor genannten Monomeren.

Die Polymerisation soll bei Temperaturen von 30 bis 80, vorzugsweise bei 45 bis 75 °C, ausgeführt werden, wobei gegebenenfalls unter Rückflußkühlung, Verwendung von 2 oder mehreren Rührgeschwindigkeiten und/oder Temperaturstufen polymerisiert werden kann. Der pH-Wert der Polymerisationsflotte sollte zwischen 2 und etwa 10 liegen.

Während der Polymerisation können einer oder mehrere der folgenden Stoffe, gegebenenfalls unter Konstanthaltung des Füllvolumens des Polymerisationsgefäßes, zugegeben werden: Wasser, wäßrige Lösungen, Monomere, Katalysatoren, Cokatalysatoren, weitere Polymerisationshilfsstoffe,wie zum Beispiel Regler, Puffersubstanzen, Emulgatoren, Suspendiermittel.

Erfindungsgemäß hergestellte Polymerisate können nach bekannten Verfahren sowohl in wäßriger Dispersion, als wasserfeuchter Kuchen oder im pulerförmigen feuchten oder trockenen Zustand von restlichen Monomeren, insbesondere Vinylchlorid, befreit werden.

Die Aufarbeitung der wäßrigen Polymerisat-Dispersion zum trockenen Pulver erfolgt ebenfalls nach bekannten Methoden, beispielsweise durch Dekantieren der Hauptmenge der wäßrigen Phase in einer Dekanter-Zentrifuge und Trocknen des so erhaltenen wasserfeuchten Kuchens in einem Strom- oder Wirbelbett-Trockner. So erhaltene, pulverförmige Polymerisate können wie bisher übliche Suspensionspolymerisate des Vinylchlorids, beispielsweise durch Extrusion, Spritzgießen oder Kalandrieren, thermoplastisch verarbeitet werden.

Durch die günstige Eigenschaftskombination der erfindungsgemäß hergestellten Polymerisate bezüglich Schüttgewicht, Weichmacheraufnahme, Korngrößenverteilung und geringe Neigung zur Bildung von Fischaugen (Stippen) eignen sich die Polymerisate besonders für Verarbeitungsvorgänge, die mit hoher Leistung hochqualifizierte, insbesondere glasklare, optisch einwandfreie Artikel erzeugen sollen.

Die folgenden Beispiele dienen zur Erläuterung der Erfindung. Die angegebenen Teile sind Gewichtsteile. Als Aglykon wurde Sorbit eingesetzt.

Vergleichsbeispiel 1 (gemäß DE-OS 2 234 038)

Ein 40 l-Polymerisationsautoklav aus rostfreiem Stahl wurde mit folgenden Bestandteilen beschickt: 20 000 Teile Wasser, 20 Teile Hydroxyethylcellulose, 250 mPa s, Handelsname Natrosol® 250 K (Firma Hercules Inc., Wilmington, USA), 4.8 Teile Aminoethylhydroxypropylcellulose, 150 mPa s (Handelsname Klucel® 6 G, Hercules Inc., Wilmington, USA) und 6 Teile Dicetylperoxydicarbonat. Der Autoklav wurde geschlossen, mit Stickstoff gespült, evakuiert und anschließend mit 10 000 Teilen Vinylchlorid beschickt. Die Polymerisation wurde bei 54°C bis zu einem Druck von 5 bar durchgeführt. Das Produkt wurd anschließend vom größten Teil des Suspensionswassers getrennt und bei 50°C in einem Wirbelbetttrockner getrocknet.

Das Produkt führt zu Fertigteilen mit vielen Stippen (Tabelle 2).

Vergleichsbeispiel 2 (gemäß GB-PS 991 134)

Ein 40 l-Polymerisationsautoklav aus rostfreiem Stahl wurde mit folgenden Bestandteilen beschickt: 20 000 Teile Wasser, 10 Teile eines teilverseiften Polyvinylacetats mit einem Hydrolysegrad von 88 Mol.-% und einer Viskosität von 27 mPa s, gemessen in 4%iger wäßriger Lösung bei 20°C nach Hoeppler, 10 Teile Poly(N-Vinylpyrrolidon) ("Luviskol® K 90" von BASF AG/Ludwigshafen), 10 Teile Lauroylperoxid und 7.5 Teile Natriumcarbonat. Der Autoklav wurde geschlossen, mit Stickstoff gespült, evakuiert und anschließend mit 10 000 Teilen Vinylchlorid beschickt. Die Polymerisation wurde bei 54°C bis zu einem Druck von 5 bar durchgeführt. Das Produkt wurde anschließend vom größten Teil des Suspensionswassers getrennt und bei 50°C in einem Wirbelbetttrockner getrocknet.

Das Produkt führt zu Fertigteilen mit extrem vielen Stippen (Tabelle 2).

Vergleichsbeispiel 3 (gemäß DE-OS 2 653 087)

Ein 40 l-Polymerisationsautoklav aus rostfreiem Stahl wurde mit folgenden Bestandteilen beschickt: 20 000 Teile Wasser, 5 Teile eines teilverseiften Polyvinylacetats mit einem Hydrolysegrad von 70 Mol.-% und einer Viskosität von 5 mPa•s, gemessen in 4%iger wäßriger Lösung bei 20°C nach Hoeppler, als Cosuspensionsmittel 2 Teile eines teilverseiften Polyvinylacetats mit einem Hydrolysegrad von zirka 50 Mol.-% ("Polivic® S 202" von Sigma Italiana Prodotti Chimici S.p.A., Bergamo), 10 Teile Lauroylperoxid und 5 Teile Ammoniumhydrogencarbonat. Der Autoklav wurde geschlossen, mit Stickstoff gespült, evakuiert und anschließend mit 10 000 Teilen Vinylchlorid beschickt. Die Polymerisation wurde bei 56°C bis zu einem Druck von 5 bar durchgeführt. Das Produkt wurde anschließend vom größten Teil des Suspensionswassers getrennt und bei 50°C in einem Wirbelbetttrockner getrocknet.

Das Produkt hat eine niedrige Schüttdichte und folglich einen reduzierten Ausstoß bei der Hart-Extrusion (Tabelle 2).

Vergleichsbeispiel 4 (gemäß DE-OS 2 208 796)

Es wurde wie im Vergleichsbeispiel 3 gehandelt, jedoch wurden als Cosuspensionsmittel 3 Teile Sorbitanmonolaurat verwendet.

Auch dieses Produkt hat einen reduzierten Ausstoß bei der Hart-Extrusion (Tabelle 2).

Vergleichsbeispiel 5

Es wurde wie im Beispiel 1 gehandelt, jedoch wurde der erfindungsgemäße Kohlenhydratester weggelassen.

Das Produkt hat ein sehr grobes Korn, ergibt einen reduzierten Ausstoß bei der Hart-Extrusion, und die Fertigteile zeigen viele Stippen (Tabelle 2).

Beispiele 1–5

Ein 40 l-Polymerisationsautoklav aus rostfreiem Stahl wurde mit folgenden Bestandteilen beschickt: 20 000 Teile Wasser, 5 Teile eines teilverseiften Polyvinylacetats mit einem Hydrolysegrad von 70 Mol.-% und einer Viskosität von 5 mPa s, gemessen in 4%iger wäßriger Lösung bei 20°C, 2 Teile eines Polyglycosylpolyolesters mit den in der Tabelle 1 angegebenen Strukturmerkmalen, 10 Teile Lauroylperoxid und 5 Teile Ammoniumhydrogencarbonat. Der Autoklav wurde geschlossen, mit Stickstoff gespült, evakuiert und anschließend mit 10 000 Teilen Vinylchlorid beschickt. Die Polymerisation wurde bei 56 °C bis zu einem Druck von 5 bar durchgeführt. Das Produkt wurde anschließend vom größten Teil des Suspensionswassers getrennt und bei 50 °C im Wirbelbetttrockner getrocknet.

Die nach diesem Verfahren hergestellten Produkte zeigen bei der Hart-Extrusion einen hohen Ausstoß und führen dabei zu Fertigteilen mit wenig Stippen (vgl. Tabelle 2).

Beispiele 6-10

Ein 40 l-Polymerisationsautoklav aus rostfreiem Stahl wurde mit folgenden Bestandteilen beschickt: 20 000 Teile Wasser, 9 Teile eines teilverseiften Polyvinylacetats mit einem Hydrolysegrad von 70 mol-% und einer Viskosität von 5 mPa s, gemessen in 4 %iger wäßriger Lösung bei 20 °C, 20 Teile eines Polyglycosylpolyolesters mit den in der Tabelle 1 angegebenen Strukturmerkmalen, 9 Teile Lauroylperoxid, 9 Teile Dicetylperoxodicarbonat und 4 Teile Ammoniumhydrogencarbonat. Der Autoklav wurde geschlossen, mit Stickstoff gespült, evakuiert und anschließend mit 10 000 Teilen Vinylchlorid beschickt. Die Polymerisation wurde bei 54 °C bis zu einem Druck von 5 bar durchgeführt. Das Produkt wurde anschließend vom größten Teil des Suspensionswassers getrennt und bei 50 °C im Wirbelbetttrockner getrocknet.

Die nach diesem Verfahren hergestellten Produkte (Tabelle 3) sind auf Grund ihrer hohen Porosität hervorragend für eine Weich-Verarbeitung mit hochviskosen Weichmachern geeignet. Die dabei erhaltenen Fertigteile haben wenig Stippen.

Tabelle 1: Strukturübersicht der Polyglycosylpolyolester

| Strukturtype | Durchschnittliche Zahl n der Anhydrocoseeinheiten des Kohlenhydratrestes | Art des Carbonsäurerestes | Molares Verhältnis von Anhydroglycose zu Carbonsäure |
|---|---|---|---|
| A | 12 | Rübölfettsäurerest | 3:1 |
| B | 12 | Rübölfettsäurerest | 1:1 |
| C | 2 | Tallölfettsäurerest | 1:1 |
| D | 2 | Kokosölfettsäurrest | 1:1 |
| E | 2 | Rübölfettsäurerest | 1:1 |
| F | 2 | Sojaölfettsäurrest | 1:1 |

Tabelle 2:

| | Strukturtype des Polyglycosyl-polyolesters entsprechend der Tabelle 1 | Korngrößenverteilung Siebrückstand in Gew.-% bei folgenden Maschenweiten 63 µm | 100 µm | 200 µm | 250 µm | Schüttdichte[1) ] (g/l) | Weichmacheraufnahme[3) ] [g DOP[2) ] / 100 g PVC] | Stippigkeit Walzfolie[6) ] (Stippen pro 20 cm²) | Extruderausstoß[7) ] (kg/h) |
|---|---|---|---|---|---|---|---|---|---|
| Beispiel 1 | A | 99 | 97 | 2 | - | 555 | 21 | 21 | 11.1 |
| Beispiel 2 | C | 99 | 98 | 17 | 0.5 | 540 | 24 | 12 | 10.2 |
| Beispiel 3 | D | 99 | 97 | 1 | - | 552 | 27 | 5 | 11.0 |
| Beispiel 4 | E | 99 | 98 | 28 | 1 | 543 | 26 | 1 | 10.2 |
| Beispiel 5 | F | 99 | 96 | 1 | - | 542 | 24 | 14 | 10.3 |
| Vergl.-Beisp. 1 | - | 98 | 84 | 9 | 0.5 | 558 | 20 | 74 | 10.8 |
| Vergl.-Beisp. 2 | - | 74 | 37 | 11 | - | 603 | 11 | > 500 | 12.0 |
| Vergl.-Beisp. 3 | - | 98 | 93 | 1 | - | 468 | 26 | 36 | 8.5 |
| Vergl.-Beisp. 4 | - | 99 | 94 | 3 | - | 485 | 22 | 46 | 8.7 |
| Vergl.-Beisp. 5 | - | 99 | 96 | 44 | 30 | 520 | 23 | 170 | 9.6 |

Tabelle 3:

| | Strukturtype des Polyglycosylpolyolesters entsprechend der Tabelle 1 | Korngrößenverteilung Siebrückstand in Gew.-% bei folgenden Maschenweiten 63 µm | 100 µm | 160 µm | 200 µm | Schüttdichte1) (g/l) | Weichmacheraufnahme3) [g DOP2) / 100 g PVC] | Weichmacheraufnahmez.4) (min.) | Bewertung der Fischaugen5) |
|---|---|---|---|---|---|---|---|---|---|
| Beispiel 6 | A | 94 | 70 | 3 | - | 468 | 39 | 4.5 | 3.9 |
| Beispiel 7 | B | 99 | 89 | 3.5 | 0.5 | 490 | 30 | 5.2 | 4.6 |
| Beispiel 8 | C | 99 | 89 | 1.5 | - | 435 | 43 | 4.2 | 3.1 |
| Beispiel 9 | D | 99 | 97 | 16 | 1 | 456 | 42 | 4.6 | 3.0 |
| Beispiel 10 | E | 97 | 94 | 8 | - | 475 | 33 | 4.8 | 4.2 |

Tabelle 2.3 – Fortsetzung

1) Nach DIN 53 468; 2) DOP = Di-2-Ethylhexylphthalat; 3) Nach DIN 53 417/1 (Zentrifugierverfahren) – ist ein Maß für die Kornporosität; 4) Zeit bis zum Trockenpunkt einer PVC:Di-2-Ethylhexylphthalat = 60 : 40-Mischung, gemessen im Brabender-Planetenmischer bei 85°C; 5) Prüfmethode mit einem hochviskosen polymeren Adipinsäureester als Weichmacher. Vergleich mit Standardproben, wobei 6 eine extrem hohe Anzahl, 3.5 eine mittlere Anzahl und 1 eine extrem niedrige Anzahl Fischaugen bedeuten. Die Zahlen dazwischen sind entsprechende Zwischenabstufungen. Die angegebenen Werte sind Mittelwerte aus mehreren Beurteilungen von Blasfolien, die bei drei verschiedenen Schneckendrehzahlen extrudiert wurden. Prüfrezeptur: 70 Teile PVC, 30 Teile Witamol® 621, 4 Teile Nuostab® V 1204, 0.2 Teile LOXIOL® G 40; 6) Gemäß den Vorschriften des Leuchs-Prüfversuchs wird aus einer Polyvinylchlorid-Weichmacher-Ruß-Mischung ein Walzfell hergestellt, das nach einem bestimmten Zeitraum in definierter Dicke abgenommen wird. Die ungelierten hellen Teilchen werden in einer Fläche definierter Größe ausgezählt. Die angegebenen Werte sind Mittelwerte aus mehreren Zählmengen; 7) Eine Mischung, bestehend aus: 100 Gew.-Teilen PVC, 2 Gew.-Teilen Bleistabilisator ("Bärospan® SMS 302", Chem. Fabrik Otto Bärlocher, München), 1 Gew.-Teil Kalziumcarbonat wird auf einem Doppelschneckenextruder (400 mm Schneckenlänge, konischer Schnitt) zu Rohren von 32 mm Durchmesser und 1.8 mm Wandstärke extrudiert. Bei einer konstanten Schneckendrehzahl von 30 $min^{-1}$ wird die Menge des während 30 Minuten ausgestoßenen Extrudats gravimetrisch bestimmt und auf kg/h umgerechnet.

**Patentansprüche**

1. Verfahren zur Herstellung von Polyvinylchlorid durch Polymerisation von Vinylchlorid in wäßriger Suspension in Gegenwart von bis zu 20 Gew.-%, bezogen auf eingesetzte Monomere, copolymerisierbarer Monomerer oder bis zu 20 Gew.-%, bezogen auf eingesetzte Monomere, mit Vinylchlorid pfropfcopolymerisierbarer Polymerer, in Gegenwart von 0,001 bis 3 Gew.-% öllöslichen radikalisch zerfallenden Aktivatoren, einem Gemisch aus 2 oder mehr hochmolekularen, oberflächenaktiven Suspendiermitteln, sowie gegebenenfalls in Gegenwart von Emulgatoren, Puffersubstanzen und Molekülgrößenreglern bei 30 bis 80°C, dadurch gekennzeichnet, daß 0,04 bis 1 Gew.-%, bezogen auf eingesetzte Monomere, eines Suspendiermittelgemisches verwendet werden, welches besteht aus

a) 10–90 Gew.-%, bezogen auf das Suspendiermittelgemisch, eines Kohlenhydratesters aus einem Kohlenhydrat folgender Formel:

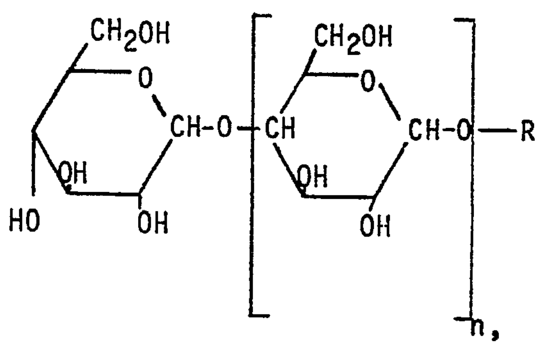

in der n eine Zahl von 0 bis 99 und R den Rest eines 2- bis 6-wertigen aliphatischen linearen oder verzweigten Alkohols mit 2 bis 12 Kohlenstoffatomen bedeutet, und einer gesättigten oder ungesättigten, linearen oder verzweigten Carbonsäure mit 6 bis 24 Kohlenstoffatomen, wobei die molare Menge der im Kohlenhydratester vorliegenden Fettsäure mindestens 1 Mol, bezogen auf das Kohlenhydrat, vorzugsweise 0,5 bis 2 Mol pro Anhydroglycoseeinheit beträgt, sowie

b) 90 bis 10 Gew.-%, bezögen auf das Suspendiermittelgemisch, Methylcellulose, Methylhydroxyethylcellulose oder Methylhydroxypropylcellulose mit einem molekularen Substitutionsgrad der Methoxygruppe von 1.4 bis 2.4 und einem molaren Substitutionsgrad der ggf. vorhandenen Hydroxyalkoxygruppe, von 0.08 bis 0.28; oder Hydroxyethylcellulose der Hydroxypropylcellulose mit einem molaren Substitutionsgrad von 1 bis 3.5; oder Aminoethyl-hydroxypropyl-cellulose mit einem molaren Substitutionsgrad der Aminoethylgruppe von 0.05 bis 1 und der Hydroxypropylgruppe von 3 bis 5, wobei die 2 Gew.-%ige wäßrige Lösung der genannten Celluloseether bei 20°C eine Viskosität von 15 bis 500 # $10^{-3}$ Pa#s ausweist, oder eines teilverseiften Polyvinylacetats mit einem Hydrolysegrad von 69–90 Mol.-% und einer Viskosität von 2 bis 100 mPa#s, gemessen in 4 Gew.-%iger wäßriger Lösung, bei 20°C.

2. Verfahren nach Anspruch 1, dadurch gekennzeichnet, daß das Suspendiermittelgemisch zu 20 bis 80 Gew.-% aus der Komponente b) besteht, welche ein teilverseiftes Polyvinylacetat mit einem Hydrolysegrad von 69 bis 75 Molprozent ist.

3. Verfahren nach Anspruch 1, dadurch gekennzeichnet, daß Komponente a) in Mengen von 20 bis 80 Gew.-%, bezogen auf das Suspendiermittelgemisch, eingesetzt wird.

**Claims**

1. A process for the preparation of polyvinyl chloride by polymerization of vinyl chloride in aqueous suspension at 30 to 80°C in the presence of up to 20% by weight, based on the monomers employed, of monomers which can be copolymerized or up to 20% by weight, based on the monomers employed, of polymers which can be graft-copolymerized with vinyl chloride, in the presence of 0.001 to 3% by weight of oil-soluble activators which of 2 or more high-molecular-weight, surface-active suspending agents, and optionally in the presence of emulsifiers, buffer substances and molecular-weight regulators, characterized in that 0.04 to 1% by weight, based on the monomers employed, of a suspending agent mixture is used which is composed of

a) 10–90% by weight, based on the suspending agent mixture, of a carbonhydrate ester made from a carbohydrate of the following formula:

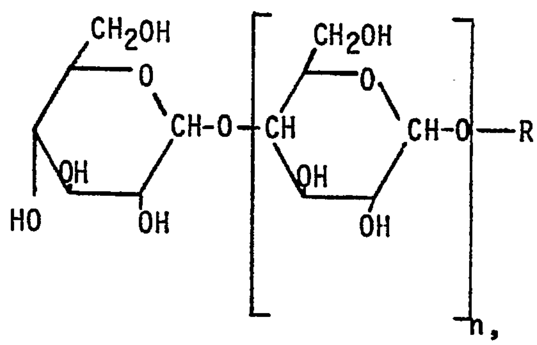

in which n denotes a number from 0 to 99 and R denotes the radical of a dihydric to hexahydric, aliphatic, linear or branched alcohol having 2 to 12 carbon atoms, and from a saturated or unsaturated, linear or branched carboxylic acid having 6 to 24 carbon atoms, the molar amount of fatty acid present in the carbohydrate ester being at least 1 mole based on the carbonhydrate, preferably 0.5 to 2 moles per anhydroglycose unit, and

b) 90 to 10% by weight, based on the suspending agent mixture, of methylcellulose, methylhydroxyethylcellulose or methylhydroxypropylcellulose having a molar degree of substitution of the methoxy group of from 1.4 to 2.4 and molecular degree of substitution of the optional hydroxyalkoxy group of from 0.08 to 0.28; or hydroxyethylcellulose or hydroxypropylcellulose having a molar degree of substitution of from 1 to 3.5; or aminoethylhydroxypropylcellulose having a molar degree of substitution of the aminoethyl group of from 0.05 to 1 and of the hydroxypropyl group of from 3 to 5, the 2% strength aqueous solution of the cellulose ethers mentioned having a viscosity of from 15 to 500 × $10^{-3}$ Pa·s at 20°C, or of a partially hydrolyzed polyvinyl acetate having a degree of hydrolysis of 69–90 mole-% and a viscosity of from 2 to 100 mPa·s, measured in 4% strength aqueous solution, at 20°C.

2. A process according to claim 1, characterized in that the suspending agent mixture is composed of 20 to 80% by weight of component b), which is a partially hydrolyzed polyvinyl acetate having a degree of hydrolysis of from 69 to 75 mole per cent.

3. A process according to claim 1, characterized in that component a) is employed in amounts of from 20 to 80% by weight, based on the suspending agent mixture.

**Revendications**

1. Procédé pour la préparation de polychlorure de vinyle par polymérisation de chlorure de vinyle en suspension aqueuse en présence de jusqu'à 20% en poids, relativement au monomère utilisé de monomère copolymérisable ou de jusqu'à 20% en poids, relativement au monomère utilisé, de polymères capables de copolymériser par greffage avec le chlorure de vinyle, en présence de 0,001 à 3% en poids d'activants solubles dans les huiles et se décomposant radicalairement, d'un mélange de 2 ou plusieurs agents tensio-actifs de suspension de poids moléculaire élevé et activité superficielle, ainsi que, la cas échéant, en présence d'émulsifiants, de substances-tampons et de régulateurs du poids moléculaire, à une température de 30 à 80°C, caractérisé par le fait que l'on utilise, relativement au monomère mis en œuvre, de 0,04 à 1% en poids d'un mélange d'agents de suspension qui est constitué par

a) 10 à 90% en poids, relativement au mélange d'agents de suspension, d'un ester d'hydrate de carbone de la formule suivante:

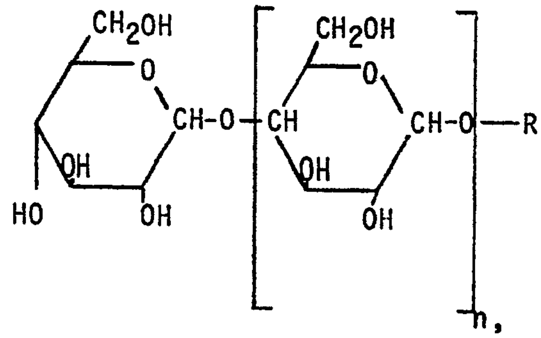

dans laquelle n est un nombre d'une valeur de zéro à 99 et R représente le reste d'un alcool aliphatique bi-fonctionnel à hexa-fonctionnel, linéaire ou ramifié, comportant de 2 à 12 atomes de carbone, et d'un acide carboxylique saturé ou non saturé, linéaire ou ramifié, comportant de 6 à 24 atomes de carbone, la quantité molaire de l'acide gras présent dans l'ester de l'hydrate de carbone étant d'au moins une mole, relativement à l'hydrate de carbone, de préférence de 0,5 à 2 moles par unité glycose anhydre, ainsi que par

b) 90 à 10% en poids, relativement au mélange d'agents de suspension, de méthyl-cellulose, de méthyl-hydroxy-éthyl-cellulose ou de méthyl-hydroxy-propyl-cellulose d'un degré moléculaire de substitution du groupe méthoxy de 1,4 à 2,4 et d'un degré molaire de substitution du groupe hydroxy-alcoxy éventuellement présent de 0,08 à 0,28, ou d'hydroxy-éthyl-cellulose ou d'hydroxy-propyl-cellulose d'un degré molaire de substitution de 1 à 3,5, ou d'amino-éthyl-hydroxy-propyl-cellulose d'un degré molaire de substitution du groupe amino-éthyle de 0,05 à 1 et du groupe hydroxy-propyle de 3 à 5, la solution aqueuse à 2% en poids des éthers cellulosiques indiqués présentant à 20°C une viscosité de 15 à 500 $\cdot 10^{-3}$ Pa·s, ou d'un poly-acétate de vinyle partiellement saponifié, d'un degré d'hydrolyse de 69 à 90 moles-% et d'une viscosité de 2 à 100 mPa·s, mesurée à 20°C dans une solution aqueuse à 4% en poids.

2. Procédé selon la revendication 1, caractérisé par le fait que le mélange d'agents de suspension est constitué pour 20 à 80% en poids par le composant b) qui est un poly-acétate de vinyle partiellement saponifié d'un degré d'hydrolyse de 69 à 75 moles-%.

3. Procédé selon la revendication 1, caractérisé par le fait que l'on utilise le composant a) dans des quantités de 20 à 80% en poids, relativement au mélange d'agents de suspension.